# EUROPEAN PATENT APPLICATION

(11) **EP 3 779 966 A1**
(43) Date of publication of application: **17.02.2021**
(21) Application number: 18918144.9
(22) Date of filing: 10.05.2018
(51) Int. Cl.: G10L 15/22, G10L 15/16

(54) **ARTIFICIAL INTELLIGENCE SERVICE METHOD AND DEVICE THEREFOR**

(71) Applicant: Llsollu Co., Ltd., Seoul 06775 (KR)
(72) Inventor: KIM, Suntae, Seoul 06953 (KR); JI, Changjin, Seoul 06994 (KR)
(74) Representative: Wittmer, Maximilian
(86) International application number: PCT/KR2018/005409
(87) International publication number: WO 2019/216461

(57) **Abstract**

An artificial intelligence service method and a device therefor are disclosed. Specifically, a method for providing an artificial intelligence service by an artificial intelligence device may comprise the steps of: receiving an input of user data including user biometric information; performing user adaptive training for transforming a base artificial intelligence model to be suitable for a characteristic of the user data; and providing an artificial intelligence service by applying an artificial intelligence model generated as a result of the user adaptive training.

## Description

### Technical Field

The present invention relates to a method (biometric information security method) for operating an artificial intelligence system such as speech recognition, etc., without leaking biometric information such as voice, etc., out of a terminal, and a device for supporting the same.

### Background Art

Automatic speech recognition (hereinafter, speech recognition) is a technology that converts speech into a text by using a computer. Speech recognition technology has made rapid progress in recent years and has been commercially used in artificial intelligence speakers, etc.

Speech recognition technology is a technology based on artificial intelligence learning. Speech recognition learning deals with large-scale speech data and thus takes days to weeks to be performed even in high-end servers.

Speech has a distinct characteristic for each speaker and uses a wide vocabulary, and thus adaptation is required for each user. In other words, it is necessary to tune a speech recognizer in accordance with a user's voice.

User information such as voice, vocabulary or the like is required for user adaptive training.

However, since speech learning is generally performed in a high-end server, user information is transferred from a terminal to the high-end server outside. In this case, there is a problem that biometric information such as the user's voice, etc., is transferred to the outside.

### Technical Problem

An object of the present invention is to propose a method for operating an artificial intelligence system such as speech recognition, etc., without leaking biometric information such as voice, etc., out of a terminal.

The technical problems to be achieved in the present invention are not limited to the technical problems mentioned above, and other technical problems that are not mentioned herein may be clearly understood by those skilled in the art, to which the present invention pertain, from the following description.

### Technical Solution

According to one aspect of the present invention, a method for providing an artificial intelligence service by an artificial intelligence device may include: receiving an input of user data including user biometric information; performing user adaptive training for transforming a base artificial intelligence model to be suitable for a characteristic of the user data; and providing an artificial intelligence service by applying an artificial intelligence model generated as a result of the user adaptive training.

Preferably, the method may further include receiving the base artificial intelligence model from a remote server.

Preferably, the base artificial intelligence model may be pre-stored in the artificial intelligence device.

Preferably, the user adaptive training may be performed during a time when the artificial intelligence service is not provided.

Preferably, the user adaptive training may be performed in real time even while the artificial intelligence service is provided.

Preferably, the inputted user data may be accumulated and stored until the user adaptive training is started.

Preferably, the method may further include evaluating confidence of results of recognizing the user data, in which the user data may not be used in the user adaptive training when the confidence is smaller than a pre-set threshold value.

According to another aspect of the present invention, an artificial intelligence device for providing an artificial intelligence service may include: an input unit for receiving an input of user data including user biometric information ;a memory for storing the user data; and a processor for controlling the input unit and the memory, in which the processor may receive an input of user data including user biometric information through the input unit, perform user adaptive training for transforming a base artificial intelligence model to be suitable for a characteristic of the user data, and provide an artificial intelligence service by applying an artificial intelligence model generated as a result of the user adaptive training.

### Advantageous Effects

According to an embodiment of the present invention, it is possible to improve and maintain the quality of artificial intelligence without leaking user information such as biometric information, etc., to the outside of a terminal.

In addition, according to an embodiment of the present invention, there is no need to learn a large amount of data, thereby making it possible to carry out implementation even in a low-end terminal.

The effects obtainable from the present invention are not limited to the effects mentioned above, and other effects that are not mentioned herein will be clearly understood by those skilled in the art, to which the present invention pertains, from the following description.

### Description of Drawings

The accompanying drawings, which are included herein as a part of the detailed description for better understanding of the present invention, provide embodiments of the present invention and describe the technical features of the present invention together with the detailed description.
- FIGS. 1 and 2: are views for explaining an existing artificial intelligence service and training method in which biometric information security is not guaranteed.
- FIGS. 3 and 4: are views for explaining an artificial intelligence service and training method in which biometric information security is guaranteed according to one embodiment of the present invention.
- FIG. 5: is a block view for illustrating a configuration of a terminal according to one embodiment of the present invention.

### Mode for Invention

Hereinafter, preferred embodiments of the present invention will be described in detail with reference to the accompanying drawings. The detailed description to be disclosed hereinafter together with the accompanying drawings is intended to describe exemplary embodiments of the present invention and is not intended to represent the only embodiments in which the present invention may be practiced. The following detailed description includes specific details to provide a complete understanding of the present invention. However, those skilled in the art appreciate that the invention may be practiced without these specific details.

In some cases, in order to avoid obscuring the concept of the present invention, well-known structures and devices may be omitted or shown in a form of block view based on key functions of each structure and device.

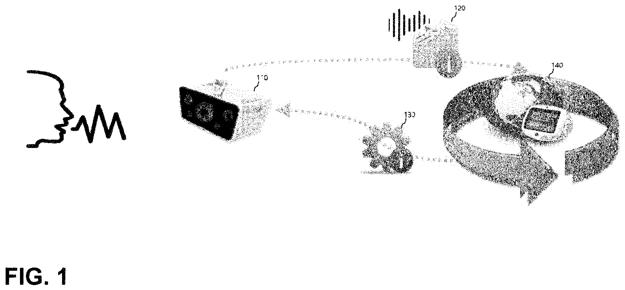

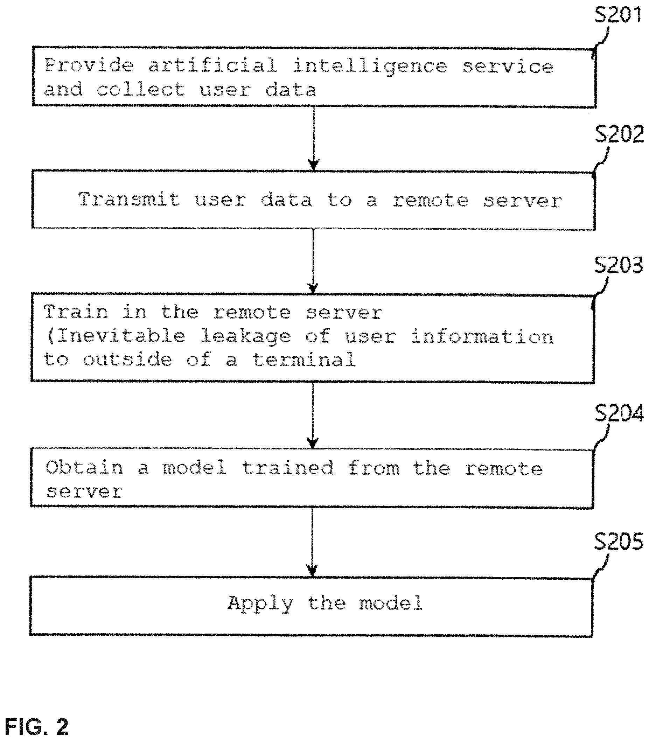

FIGS. 1 and 2 are views for explaining an existing artificial intelligence service and training method in which biometric information security is not guaranteed.

Referring to FIGS. 1 and 2, a terminal 110 may collect user data (for example, voice, fingerprint, iris, etc.) while providing an artificial intelligence service together (S201).

The terminal 110 may transmit the collected user data 120 to a remote server 140 located in a remote site (S202).

The user data 120 transmitted to the remote server 140 may be used in the remote server 140 for training (learning) (S203).

In this case, as the user data 120 are transmitted to the remote server 140, it may be inevitable that user information (data) is leaked to the outside of the terminal.

An artificial intelligence model 130 that has finished training in the remote server 140 may be transmitted to the terminal 110, that is, the terminal 110 may obtain an artificial intelligence model 130 from the remote server 140 (S204).

The terminal 110 may provide an artificial intelligence service as a new artificial intelligence model by reflecting the obtained artificial intelligence model 130 (S205).

If the above method is used, there may occur a problem that user information (data) is inevitably transmitted to a server in a remote site. In this case, the user's information (data), especially biometric information such as voice, may be used as a key for a security system, and thus external leakage needs to be prevented.

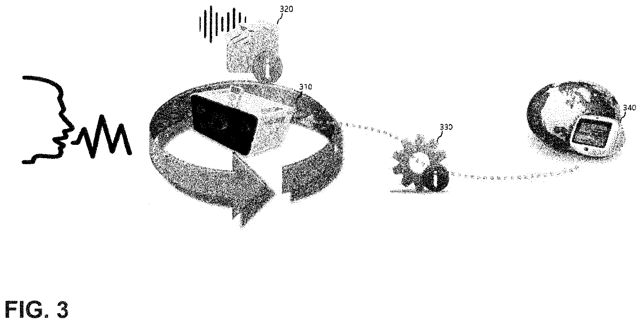

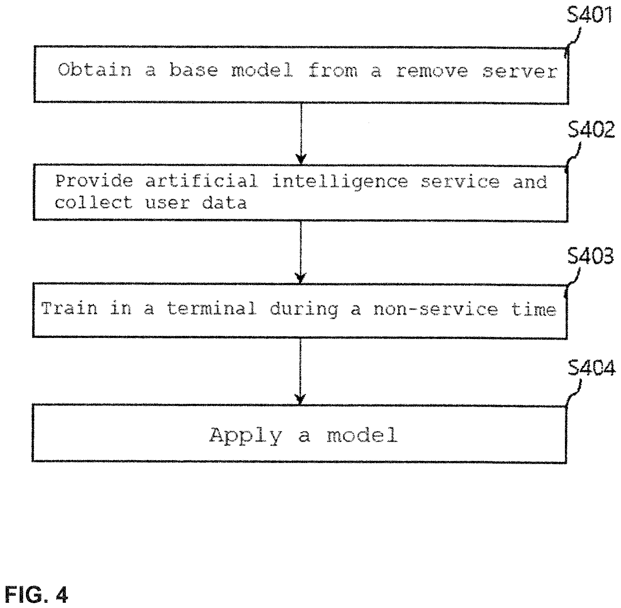

FIGS. 3 and 4 are views for explaining an artificial intelligence service and training method in which biometric information security is guaranteed according to one embodiment of the present invention.

Referring to FIGS. 3 and 4, a terminal 310 may obtain a base artificial intelligence model from a remote server 340 in a remote site (S401).

The terminal 310 may collect user data (for example, voice, fingerprint, iris, etc.) while providing an artificial intelligence service together (S401).

In this case, the collected information may be stored in the terminal 310 until training (i.e., learning). For example, the information collected before training may be accumulated and stored in the terminal.

The terminal 310 may start user adaptive training at a specific point of time (for example, during a time when the artificial intelligence service is not provided) by using the base artificial intelligence model and the user data (S403).

After the training is finished, the artificial intelligence service may be continued by reflecting a new artificial intelligence model on the terminal 310 (404).

In this case, in the method described above, the base artificial intelligence model may not be obtained from the remote server 340, but may be pre-stored in the terminal 310 (i.e., provisioning).

In the method described above, the user adaptive training may not refer to creating an artificial intelligence model from the beginning, but refer to transforming and/or modifying the base artificial intelligence model to be suitable for the characteristics extracted from user data. Thus, it may be possible to save time and cost without a need for a large amount of data compared to newly building the artificial intelligence model from the beginning.

In addition, in the method described above, training time may decrease as the amount of data used for user adaptive training decreases. However, training efficiency may decrease if there is no necessary data. To solve this problem, it is desirable to exclude unnecessary data from training, while setting aside the necessary data. In this case, the data unnecessary for user adaptive training may refer to well-recognized data. In the present invention, it may be assumed that the system can determine whether data are well recognized or not.

As such, if the method proposed in the present invention is used, the user data (information) may not be leaked to the outside of the terminal, and the user adaptive training may be performed together.

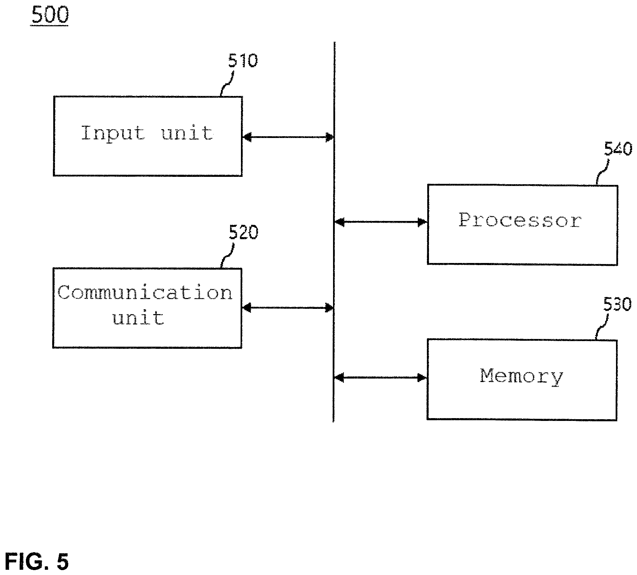

FIG. 5 is a block view for illustrating a configuration of a terminal according to one embodiment of the present invention.

Referring to FIG. 5, a terminal 500 (i.e., an artificial intelligence device) according to the present invention may include an input unit 510 for receiving an input of user data, a communication unit 520 for receiving a base artificial intelligence model, and a memory 530 for storing the user data and the base artificial intelligence model, and a processor 540 for performing the user adaptive training by using the base artificial intelligence model and the user data.

The input unit 110 may be a constituent element for receiving an input of user data, and in particular, may include a microphone. When a user's uttered speech is inputted, the input unit 110 may convert the speech into an electrical signal and output the signal to the processor 540. In addition, the input unit 110 may include biometric sensors for receiving an input of user biometric information. An example of the biometric sensor may include a facial recognition sensor, an iris recognition sensor, a fingerprint recognition sensor, and the like.

The communication unit 120 may include one or more modules that enable wired/wireless communication with a remote server. For example, the communication unit 120 may include a broadcast receiving module, a mobile communication module, a wireless Internet module, a short range communication module, and the like.

The broadcast receiving module may receive a digital broadcasting signal by using a digital broadcasting system, for example, Digital Multimedia Broadcasting-Terrestrial (DMB-T), Digital Multimedia Broadcasting-Satellite (DMB-S), Media Forward Link Only (MediaFLO), Digital Video Broadcasting-Handheld (DVB-H), Integrated Services Digital Broadcast-Terrestrial (ISDB-T), etc.

A mobile communication module may transmit and receive radio signals with at least one of a base station, an external terminal, and a server on a mobile communication network. The radio signal may include a voice call signal, a video call signal, or various types of data according to transmission/reception of text/multimedia messages.

The wireless Internet module may refer to a module for wireless Internet access and may be built in or external to the terminal. A wireless Internet technology may include Wireless LAN (WLAN, Wi-Fi), Wireless broadband (Wibro), World Interoperability for Microwave Access (Wimax), High Speed Downlink Packet Access (HSDPA), and the like.

A short range communication module may refer to a module for short range communication. A short range communication technology may include Bluetooth, Radio Frequency Identification (RFID), infrared Data Association (IrDA), Ultra Wideband (UWB), ZigBee, Near Field Communication (NFC), etc.

The processor 540 may implement the functions, processes and/or methods as proposed in FIGS. 3 and 4 described above.

The processor 540 may perform the user adaptive training by using user data inputted from the input unit 510 and a base artificial intelligence model received (or pre-stored) from a remote server. In addition, the processor 540 may perform processing/transformation, etc. of user data received from the input unit 510 in order to perform the user adaptive training.

In addition, the processor 540 may store the user data inputted from the input unit 510 and the base artificial intelligence model received from a remote server into the memory 530. Furthermore, the processor 540 may store a new artificial intelligence model, which is a result of user adaptive training, into the memory 530.

In particular, the processor 540 may obtain a user's speech data by applying a speech recognition algorithm or a speech recognition engine to the signal received from the input unit 510.

In this case, the signal inputted to the processor 540 may be converted into a more useful form for speech recognition, and the processor 540 may convert the inputted signal from an analog form to a digital form, and may detect a start point and an end point of the speech so as to detect an actual speech section/data included in the speech data. This is called End Point Detection (EPD).

And, the processor 540 may extract a feature vector of the signal by applying a feature vector extraction technique such as Cepstrum, Linear Predictive Coefficient (LPC), Mel Frequency Cepstral Coefficient (MFCC), Filter Bank Energy or the like within the detected section.

The processor 540 may store information on an end point of speech data and a feature vector by using the memory 530 for storing data.

And, the processor 540 may obtain a recognition result by comparing the extracted feature vector with a trained reference pattern. For this purpose, it may be possible to use an acoustic model for modeling and comparing signal characteristics of speech and a language model for modeling a language ordering relationship such as words, syllables or the like corresponding to a recognized vocabulary.

The acoustic model may be divided again into a direct comparison method, which sets an object to be recognized as a feature vector model and compares with a feature vector of speech data, and a statistical method, which statistically processes and uses a feature vector of an object to be recognized.

The direct comparison method may be a method, which sets a unit such as a word, a phoneme, etc., which is the object to be recognized, as a feature vector model and compares how much the inputted speech is similar to this vector model, and a vector quantization method may be typically used as the direct comparison method. According to the vector quantization method, a feature vector of inputted speech data may be mapped with a codebook, which is a reference model, and the obtained mapped values may be encoded into representative values, thereby comparing the encoded values with each other.

The statistical model method may be a method, which configures a unit for the object to be recognized in a state sequence and uses a relationship between state sequences. The state sequence may include a plurality of nodes. The method of using the relationship between the state sequences may be divided again into Dynamic Time Warping (DTW), Hidden Markov Model (HMM), a method using a neural network, etc.

Dynamic Time Warping (DTW) may be a method, which compensates for a difference on a time axis when compared with a reference model by considering the dynamic characteristics of the speech, in which a signal length varies with time even if the same person speaks the same pronunciation. Hidden Markov Model (HMM) may be a recognition technique, in which speech is assumed in a Markov process having a state transition probability and an observation probability of a node (output symbol) in each state, after which the state transition probability and the observation probability of the node are estimated through learning data, and then a probability that inputted speech occurs from the estimated model is calculated.

Meanwhile, in the language model for modeling the language ordering relationship such as words, syllables or the like, it may be possible to reduce acoustic ambiguity and errors of recognition by applying an ordering relationship between the units, which constitute a language, to units obtained from the speech recognition. The language model may include a statistical language model and a model based on finite state networks (Finite State Automata: FSA), and the statistical language model may use a chain probability of words such as Unigram, Bigram, Trigram, etc.

The processor 540 may use any of the methods described above when recognizing speech. For example, the acoustic model to which the HMM is applied may be used, or an N-best search method, in which the acoustic model and the language model are combined, may be used. In the N-best search method, up to N recognition result candidates may be selected using the acoustic model and the language model, and then the ranking of these candidates may be re-evaluated, thereby improving the recognition performance.

The processor 540 may calculate a confidence score (or may be abbreviated as "confidence") in order to ensure the confidence of the recognition result.

The confidence score may be a measure indicating how much the speech recognition results are reliable. In this regard, the confidence score may be defined as a relative value to a probability that a corresponding speech is uttered from other phonemes or words, with respect to phonemes or words which are the recognized results. Accordingly, the confidence score may be expressed as a value between 0 and 1, or expressed as a value between 0 and 100. If the confidence score is greater than a preset threshold, the recognition result may be recognized. If the confidence score is smaller than the preset threshold, the recognition result may be rejected.

Besides, the confidence score may be obtained according to various conventional algorithms for confidence score acquisition.

If the confidence score is less than the threshold value, or if a feedback indicating a wrong recognition, that is, a false recognition, is received from a user, the processor 540 may not use the corresponding user data (for example, speech data) in user adaptive training. In other words, the corresponding user data may be removed.

The memory 530 may include at least one storage medium of flash memory, hard disc, memory card, Read-Only Memory (ROM), Random Access Memory (RAM), memory card, Electrically Erasable Programmable Read-Only Memory (EEPROM), Programmable Read-Only Memory (PROM), magnetic memory, magnetic disk, and optical disk.

An embodiment according to the present invention may be implemented by various devices, for example, hardware, firmware, software, or a combination thereof. In the case of implementation by hardware, one embodiment of the present invention may be implemented by at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In the case of implementation by firmware or software, one embodiment of the present invention may be implemented in the form of a module, a procedure, a function, etc., which perform the functions or operations as described above. The software code may be stored in a memory and driven by a processor. The memory may be located inside or outside the processor, and may exchange data with the processor through various known devices.

It will be apparent to those skilled in the art that the present invention may be embodied in other specific forms without departing from the essential features of the present invention. Thus, the above detailed description should not be construed as restrictive in all respects and should be considered as illustrative. The scope of the present invention should be determined by reasonable interpretation of the appended claims, and all changes within the equivalent scope of the present invention are included in the scope of the present invention.

### Industrial Applicability

The present invention can be applied to various fields of artificial intelligence service.

## Claims

1. A method for providing an artificial intelligence service by an artificial intelligence device, the method comprising:
receiving an input of user data including user biometric information;
performing user adaptive training for transforming a base artificial intelligence model to be suitable for a characteristic of the user data; and
providing an artificial intelligence service by applying an artificial intelligence model generated as a result of the user adaptive training.

2. The method of claim 1, further comprising receiving the base artificial intelligence model from a remote server.

3. The method of claim 1, wherein the base artificial intelligence model is pre-stored in the artificial intelligence device.

4. The method of claim 1, wherein the user adaptive training is performed during a time when the artificial intelligence service is not provided.

5. The method of claim 1, wherein the user adaptive training is performed in real time even while the artificial intelligence service is provided.

6. The method of claim 1, wherein the inputted user data are accumulated and stored until the user adaptive training is started.

7. The method of claim 1, further comprising evaluating confidence of results of recognizing the user data, wherein the user data are not used in the user adaptive training when the confidence is smaller than a pre-set threshold value.

8. An artificial intelligence device for providing an artificial intelligence service, the device comprising:
an input unit for receiving an input of user data including user biometric information;
a memory for storing the user data; and
a processor for controlling the input unit and the memory, in which the processor receives an input of user data including user biometric information through the input unit, performs user adaptive training for transforming a base artificial intelligence model to be suitable for a characteristic of the user data, and provides an artificial intelligence service by applying an artificial intelligence model generated as a result of the user adaptive training.
